(19) Europäisches Patentamt
European Patent Office
Office européen des brevets

(11) **EP 3 822 825 A1**

(12) **EUROPÄISCHE PATENTANMELDUNG**

(43) Veröffentlichungstag:
**19.05.2021 Patentblatt 2021/20**

(51) Int Cl.:
***G06F 16/55*** *(2019.01)*

(21) Anmeldenummer: **19208571.0**

(22) Anmeldetag: **12.11.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Robert Bosch GmbH**
**70442 Stuttgart (DE)**

(72) Erfinder:
• **Adel, Heike**
  **70565 Stuttgart (DE)**
• **Gad-Elrab, Mohamed**
  **66111 Saarbruecken (DE)**
• **Stepanova, Daria**
  **71272 Renningen (DE)**
• **Tran, Trung Kien**
  **89073 Ulm (DE)**

(54) **VORRICHTUNG UND VERFAHREN ZUM MASCHINENLERNEN**

(57) Computerimplementiertes Verfahren zum Gruppieren von Ziel-Entitäten ($e_1$,..., $e_j$) in Cluster ($c_1$,...,$c_k$), wobei in einem Berechnungsschritt für die Ziel-Entitäten ($e_1$,...,$e_j$) abhängig von einer Zuordnung (G, G') für Entitäten (X) eine Basis-Zuordnung ($G^C$) bestimmt wird (204), in der jeder der Ziel-Entitäten ($e_1$,...,$e_j$) ein Cluster ($c_1$,...,$c_k$) zugeordnet ist, wobei abhängig von der Zuordnung (G, G') für Entitäten (X) und abhängig von der Basis-Zuordnung ($G^C$) Inferenzregeln (bt) bestimmt werden (206), wobei jede der Inferenzregeln (bt) eine Zuordnung von Entitäten (X) zu einem der Cluster ($c_1$,...,$c_k$) definiert, wobei abhängig von der Zuordnung (G, G') für Entitäten (X) und den Inferenzregeln (bt) eine verändere Zuordnung ($G^{RC}$) bestimmt wird (208), wobei überprüft wird (210), ob ein Unterschied ($\Delta q_{diff}$) zwischen der Basis-Zuordnung ($G^C$) und der veränderte Zuordnung ($G^{RC}$) einen Schwellwert ($\theta$) unterschreitet, wobei wenn der Unterschied ($\Delta q_{diff}$) den Schwellwert ($\theta$) unterschreitet, eine Zuordnung der Ziel-Entitäten ($e_1$,...,$e_j$) zu den Clustern ($c_1$,...,$c_k$) ausgegeben oder abgespeichert wird (214) und wobei anderenfalls abhängig vom Unterschied ($\Delta q_{diff}$) eine Rückführungsgröße ($\varepsilon$) bestimmt wird (212) und abhängig von der Zuordnung (G, G') für Entitäten (X) und der Rückführungsgröße ($\varepsilon$) eine Zuordnung (G') bestimmt wird, welche die Zuordnung (G, G') für eine erneute Ausführung des Berechnungsschritts ersetzt.

Fig. 2

EP 3 822 825 A1

**Beschreibung**

Stand der Technik

In wissensbasierten Systemen kann Wissen in Form eines Knowledge Graphs strukturiert gespeichert sein. Knowledge Graphen umfassen Entitäten und geben Beziehungen zwischen Entitäten wieder. Eine Mehrzahl Entitäten eines Knowledge Graphen kann als ein Cluster, d.h. eine Gruppe von Entitäten, zusammengefasst sein. Aus Ilaria Tiddi, Mathieu D'Aquin, and Enrico Motta. 2013. Explaining clusters with inductive logic programming and linked data. In Proceedings of the 12th International Semantic Web Conference (Posters & Demonstrations Track) - Volume 1035 (ISWC-PD '13), Eva Blomqvist and Tudor Groza (Eds.), Vol. 1035. CEUR-WS.org, Aachen, Germany, Germany, 257-260, und Ilaria Tiddi, Mathieu d'Aquin, and Enrico Motta. 2015. Data patterns explained with linked data. In Proceedings of the 2015th European Conference on Machine Learning and Knowledge Discovery in Databases - Volume Part III (ECMLPKDD'15), Albert Bifet, Michael May, Bianca Zadrozny, Ricard Gavalda, and Dino Pedreschi (Eds.), Vol. Part III. Springer, Switzerland, 271-275 sind Verfahren bekannt, derartige Cluster zu erklären. Dazu werden Muster extrahiert, die durch die Entitäten eines Clusters definiert sind, in dem die Beziehungen zwischen den Entitäten des Clusters analysiert werden. Aus den Mustern wird das für die Beschreibung am besten geeignete Muster basierend auf mehreren Auswertungsmetriken ausgewählt. Dieser Vorgehensweise setzt bereits vorgegebene Cluster voraus. Für vorgegebene unscharfe Cluster ist es schwer gültige Beschreibungen zu finden.

Bo Yang, Xiao Fu, Nicholas D. Sidiropoulos, and Mingyi Hong. 2017. Towards K-means-friendly spaces: simultaneous deep learning and clustering. In Proceedings of the 34th International Conference on Machine Learning - Volume 70 (ICML'17), Doina Precup and Yee Whye Teh (Eds.), Vol. 70. JMLR.org 3861-3870 verwendet tiefe neuronale Netzwerke um Daten, die in hoch-dimensionalen Zustandsräumen repräsentiert sind, in Cluster zu gruppieren. Eine Beschreibung der Cluster wird basierend auf einem Maß für eine Divergenz zwischen den Clustern bestimmt. Dabei wird vorausgesetzt, dass die Daten bereits in einem hoch-dimensionalen Vektorraum vollständig vorliegen. Da die Cluster basierend auf statistischen Test bestimmt werden, ist es schwer die Qualität der Gruppierung in die Cluster und die Erklärbarkeit der so bestimmten Cluster sicherzustellen.

Um eine Erklärung für ein Cluster zu bestimmen, sind mit diesen Vorgehensweisen zwei separate Aufgaben zu lösen. Die Cluster müssen basierend auf einem Ähnlichkeitsmaß bestimmt werden und anschließend muss eine mögliche Beschreibung für jedes der Cluster gefunden werden.

Offenbarung der Erfindung

Das Verfahren und die Vorrichtung nach den unabhängigen Ansprüchen stellen eine demgegenüber verbesserte Vorgehensweise dar.

Ein computerimplementiertes Verfahren zum Gruppieren von Ziel-Entitäten in Cluster, sieht vor, dass in einem Berechnungsschritt für die Ziel-Entitäten abhängig von einer Zuordnung für Entitäten eine Basis-Zuordnung bestimmt wird, in der jeder der Ziel-Entitäten ein Cluster zugeordnet ist, wobei abhängig von der Zuordnung für Entitäten und abhängig von der Basis-Zuordnung Inferenzregeln bestimmt werden, wobei jede der Inferenzregeln eine Zuordnung von Entitäten zu einem der Cluster definiert, wobei abhängig von der Zuordnung für Entitäten und den Inferenzregeln eine veränderte Zuordnung bestimmt wird, wobei überprüft wird, ob ein Unterschied zwischen der Basis-Zuordnung und der veränderten Zuordnung einen Schwellwert unterschreitet, wobei wenn der Unterschied den Schwellwert unterschreitet, eine Zuordnung der Ziel-Entitäten zu den Clustern ausgegeben oder abgespeichert wird und wobei anderenfalls abhängig vom Unterschied eine Rückführungsgröße bestimmt wird und abhängig von der Zuordnung für Entitäten und der Rückführungsgröße eine Zuordnung bestimmt wird, welche die Zuordnung für eine erneute Ausführung des Berechnungsschritts ersetzt. Die Zuordnungen können durch Knowledge Graphen repräsentiert werden. Dadurch werden für einen gegebenen Knowledge Graph und eine Menge vorgegebener Ziel-Entitäten eine Menge Entitäten des Knowledge Graphs besser in Cluster gruppiert. Dies stellt einen iterativen Prozess dar, in dem die Ziel-Entitäten in ein Cluster oder mehrere Cluster gruppiert werden und diese Gruppierung zur erneuten Bestimmung veränderter Cluster zurückgeführt wird. Damit werden zum einen erklärbare Cluster gelernt. Zudem wird die Präzision mit der die Entitäten einem hinsichtlich der Beschreibung sinnvollen Cluster zugeordnet werden verbessert.

Vorzugsweise wird abhängig von der Zuordnung eine symbolische Beschreibung der Cluster bestimmt, wobei die symbolische Beschreibung ausgegeben oder abgespeichert wird. Dies stellt einen iterativen Prozess dar, in dem eine Beschreibung für den einen oder die mehrere Cluster bestimmt wird und diese Beschreibung zur erneuten Bestimmung veränderter Cluster zurückgeführt wird. Dadurch wird die Präzision der Beschreibung der Cluster deutlich verbessert.

Bevorzugt wird für jede Inferenzregel aus einer Mehrzahl Inferenzregeln, die eine Zuordnung von Entitäten zu demselben Cluster definiert, ein Maß für eine Qualität der Inferenzregel bestimmt, und wobei die Inferenzregel mit dem gegenüber den anderen der Inferenzregeln für dasselbe Cluster größten Maß für die Qualität ausgewählt wird. Dadurch wird die Qualität der Zuordnung insgesamt verbessert.

Vorzugsweise umfasst die Basis-Zuordnung eine Abbildung wenigstens eines Teils der Zuordnung für Entitäten in einen mehrdimensionalen Zustandsraum, wobei die Inferenzregeln abhängig von der Abbildung bestimmt werden. Die Abbildung stellt eine Einbettung der Zuordnung im Beispiel ein Knowledge Graph Embedding dar. Damit können Probleme vermieden werden, die ansonsten bei unvollständigen Knowledge Graphen auftreten können.

Die Entitäten können Subjekte und Objekte umfassen, wobei die Zuordnung Prädikate definiert, wobei jedes der Prädikate einem Subjekt ein Objekt zuordnet, wobei abhängig von der Rückführungsgröße wenigstens ein Prädikat für ein Objekt und ein Subjekt bestimmt wird, das der Zuordnung für die erneute Ausführung des Berechnungsschritts hinzugefügt oder aus dieser entfernt wird. Subjekte, Objekte und Prädikate stellen Fakten im Knowledge Graph dar.

Dadurch werden für folgende Berechnungsschritte Fakten aus dem Zustandsgraph entweder hinzugefügt oder entfernt.

Vorzugweise umfasst die Basis-Zuordnung als Entitäten Subjekte und Objekte, wobei die Subjekte Ziel-Entitäten repräsentieren, wobei die Objekte Cluster repräsentieren, wobei die Zuordnung Prädikate definiert, wobei jedes der Prädikate einem Subjekt ein Objekt zuordnet, wobei jede der Inferenzregeln einen Rumpf und einen dem Rumpf zugeordneten Kopf umfasst, wobei der Rumpf abhängig von wenigstens einem Prädikat oder abhängig von einer Konjunktion von wenigstens zwei Prädikaten definiert ist, wobei der Kopf für ein Subjekt, das eine der Ziel-Entitäten repräsentiert, definiert, welchem der Objekte, die die Cluster repräsentieren, dieses Subjekt zugeordnet ist. Diese Form der Inferenzregeln ist besonders gut für die iterative Vorgehensweise geeignet.

Vorzugsweise wird eine Inferenzregel unabhängig von der Basis-Zuordnung basierend auf Hintergrundwissen bereitgestellt, wobei die veränderte Zuordnung abhängig von der Zuordnung für Entitäten, den Inferenzregeln und dieser Inferenzregel bestimmt wird. Damit können aus Hintergrundwissen verfügbare Inferenzregeln unabhängig von den Iterationen einfach berücksichtigt werden.

Vorzugsweise umfassen die Entitäten Subjekte und Objekte, wobei die Zuordnung Prädikate definiert, wobei jedes der Prädikate einem Subjekt ein Objekt zuordnet, wobei die symbolische Beschreibung abhängig von wenigstens einem Prädikat oder abhängig von einer Konjunktion von wenigstens zwei Prädikaten definiert ist. Diese Beschreibung kann auch für Abfragen eingesetzt werden.

Vorzugweise wird eine Vielzahl digitaler Bilder bereitgestellt, wobei für jedes der digitalen Bilder insbesondere abhängig von Daten oder Metadaten des digitalen Bildes eine der Ziel-Entitäten bestimmt wird, die ein Objekt aus dem digitalen Bild charakterisiert, wobei die Zuordnung der Ziel-Entitäten zu wenigstens einem Cluster bestimmt wird, das ein Konzept, eine Szene oder ein Objekt repräsentiert. Die Zuordnung wird beispielsweise als ein Knowledge Graph aus Daten von einer Vielzahl annotierter Bildern bestimmt. Aus den Daten digitaler Bilder werden damit die darin enthaltenen Konzepte, die Szenen oder die Objekte gelernt.

Eine entsprechende Vorrichtung zum Gruppieren von Ziel-Entitäten in Cluster umfasst einen Datenspeicher für Zuordnungen und Inferenzregeln, wobei die Vorrichtung eine Gruppiereinrichtung umfasst, die ausgebildet ist, abhängig von den Ziel-Entitäten und abhängig von einer Zuordnung für Entitäten eine Basis-Zuordnung zu bestimmen, in der jeder der Ziel-Entitäten ein Cluster zugeordnet ist, eine Lerneinrichtung, die ausgebildet ist, abhängig von der Zuordnung für Entitäten und abhängig von der Basis-Zuordnung Inferenzregeln zu bestimmen, wobei jede der Inferenzregeln eine Zuordnung von Entitäten zu einem der Cluster definiert, und wobei die Lerneinrichtung ausgebildet ist, abhängig von der Zuordnung für Entitäten und den Inferenzregeln eine veränderte Zuordnung zu bestimmen, und eine Rückführungseinrichtung, die ausgebildet ist, zu überprüfen, ob ein Unterschied zwischen der Basis-Zuordnung und der veränderte Zuordnung einen Schwellwert unterschreitet, und die ausgebildet ist, wenn der Unterschied den Schwellwert unterschreitet, eine Zuordnung der Ziel-Entitäten zu den Clustern auszugegeben oder abzuspeichern, und die ausgebildet ist anderenfalls abhängig vom Unterschied eine Rückführungsgröße zu bestimmen und abhängig von der Zuordnung für Entitäten und der Rückführungsgröße eine Zuordnung zu bestimmen, welche die Zuordnung ersetzt.

Die Vorrichtung ist vorzugsweise ausgebildet, andere Schritte der Verfahren auszuführen.

Weitere vorteilhafte Ausführungsformen ergeben sich aus der folgenden Beschreibung und der Zeichnung. In der Zeichnung zeigt

Fig. 1    eine schematische Darstellung einer Vorrichtung zur Zuordnung von Entitäten zu Clustern,

Fig. 2    eine schematische Darstellung eines Verfahrens zur Zuordnung von Entitäten zu Clustern.

Ein Knowledge Graph repräsentiert untereinander verbundene Sammlungen von sachlicher Information. Diese Information wird beispielsweise als Fakten, im Beispiel als eine Menge von Tripel definiert, die ein Subjekt, ein Prädikat und ein Objekt angeben. Im Beispiel wird angenommen, dass es sich um einen offenen Knowledge Graph handelt, der nur einen Teil der tatsächlichen Welt als Information abbildet. Im Knowledge Graph fehlende Information über die Welt wird als unbekannt angesehen und nicht als falsch. Ein beispielhaftes Tripel für das Subjekt "John", das Prädikat "arbeitet_bei" und das Objekt "Bosch" ist <John, arbeitet_bei, Bosch>. Tripel werden im Folgenden in der Darstellung Prädikat (Subjekt, Objekt) wiedergegeben. Für das beispielhafte Tripel ergibt sich die Darstellung arbeitet_bei (John, Bosch).

Für eine Knowledge Graph kann eine Einbettung, d.h. ein Knowledge Graph Embedding vorgesehen sein. Die Einbettung umfasst im Beispiel ein Modell, das die verschiedenen Elemente des Knowledge Graphs einschließlich der Entitäten und der Prädikate in einen vieldimensionalen, kontinuierlichen Vektorraum mit einer spezifischen Dimension abbildet. Im Beispiel wird ein n-dimensionaler Vektorraum verwendet, wobei n eine ganze positive Zahl größer als 1 ist. Die Entitäten können in diesem Beispiel entweder ein Subjekt oder ein Objekt sein. Die Einbettung einer Menge der Tripel eines Knowledge Graphs erfolgt mit dem Ziel, dass einige Merkmale, die die Struktur des Knowledge Graphs definieren, im mehrdimensionalen Vektorraum erhalten bleiben. Dazu werden diese Merkmale von einer Zielfunktion für das Modell erfasst, mit dem die Einbettung durchgeführt wird.

Zum Gruppieren der Entitäten in Cluster wird eine Menge Entitäten derart gruppiert, dass die Entitäten, die bezüglich eines Ähnlichkeitsmaß im vieldimensionalen Vektorraum ähnlicher sind als andere Entitäten, in demselben Cluster gruppiert werden.

Eine symbolische Beschreibung wird im Beispiel durch eine konjunktive Abfrage d(X) repräsentiert, wobei als Argument X ein Subjekt verwendet wird. Die konjunktive Abfrage verbindet eine vorgebbare oder vorgegebene Anzahl m an Tripel. Für eine Anzahl m = 3 kann eine beispielhafte konjunktive Abfrage wie folgt lauten:

$$d(X) = ist\_eine(X, Stadt) \wedge liegt\_in(X, Deutschland) \wedge liegt\_am(X, Rhein)$$

Dies ist eine Beschreibung für ein Konzept, mit dem Städte in Deutschland auffindbar sind, die am Fluss Rhein liegen. Beispielhafte Antworten für X umfassen die Städte Köln, Karlsruhe sofern diese als Subjekte in Entitäten im Knowledge Graph enthalten sind.

Eine Induktion von Inferenzregeln betrifft das Lernen der Inferenzregeln aus dem Knowledge Graph. Das Ziel des Lernens für einen vorgegebenen Knowledge Graph ist es, eine Menge von Inferenzregeln der Form $H \leftarrow B$ zu bestimmen. H bezeichnet einen Kopf der Inferenzregel, der durch ein Tripel der Form h (X, Y) definiert ist, wobei h ein Prädikat, X ein Subjekt und Y ein Objekt definiert. B stellt einen Rumpf der Inferenzregel dar, der durch Konjunktion einer Anzahl von i Tripeln der Form b1(X1, Y1), ..., bi (Xi, Yi) definiert ist, wobei i eine ganze positive Zahl größer als 1 ist. Die Größen b1, ..., bi definieren Prädikate. Die Größen X1, ..., Xi definieren Subjekte. Die Größen Y1, ..., Yi definieren Objekte. Die Größen X1, Y1, ..., Xi, Yi können Konstanten oder Variablen sein.

Eine induzierte Inferenzregel für eine Beobachtung, dass Menschen am selben Ort leben, wie ihr Lebenspartner, lautet beispielsweise für die Prädikate lebt_in und verheiratet_mit:

$$lebt\_in(X, Y) \leftarrow lebt\_in(Z, Y) \wedge verheiratet\_mit(Z, X)$$

wobei X, Y, Z jeweils entweder ein Subjekt oder ein Objekt definieren.

Aus derartigen Inferenzregeln können mittels Schlussfolgern neue Fakten für die Zuordnung G, d.h. im Beispiel den Knowledge Graph, bestimmt werden. Derartiges deduktives Vorgehen kann basierend auf einer Menge Inferenzregeln, die eine Logikprogramm darstellen, und basierend auf Hintergrundwissen, das Fakten darstellt erfolgen. Beispielsweise wird für eine vorgegebene Inferenzregel immer dann abgeleitet, dass der Kopf eine wahre Aussage ist, wenn die Inferenzregel zutrifft, d.h. wenn der Rumpf eine wahre Aussage beinhaltet.

Beispielsweise wird aus einer Inferenzregel $lebt\_in(X,Z) \leftarrow arbeitet\_bei(X,Y) \wedge ist\_in(Y,Z)$ und den Fakten aus den Tripeln arbeitet_bei(John, Bosch) und $ist\_in(Bosch, Deutschland)$ das Tripel $lebt\_in(John, Deutschland)$ abgeleitet.

Ausgehend davon wird im Folgenden ein Verfahren beschrieben, mit dem Daten in Cluster gruppiert werden, um zum einen sinnvolle Cluster für Entitäten eines Knowledge Graphs zu finden und zum anderen mittels symbolischem Lernen geeignete Beschreibungen für diese Cluster zu bestimmen.

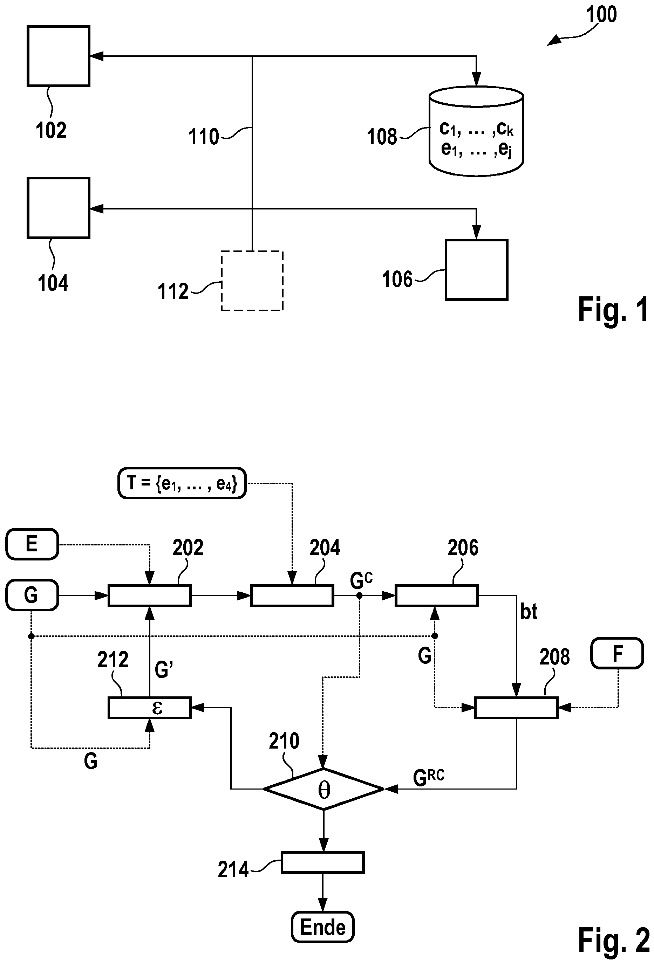

Ein Vorrichtung 100 dafür ist in Figur 1 schematisch dargestellt.

Die Vorrichtung 100 umfasst eine Gruppiereinrichtung 102, eine Lerneinrichtung 104, und eine Rückführungseinrichtung 106. Die Vorrichtung umfasst einen Datenspeicher 108. Gruppiereinrichtung 102, die Lerneinrichtung 104, und die Rückführungseinrichtung 106 sowie die Datenverbindung 110 können in Software und/oder in Hardware implementiert sein. Der Datenspeicher 108 ist ausgebildet Fakten und Beziehungen der Fakten insbesondere in Form eines Knowledge Graphen als Zuordnung G zu speichern. Im Beispiel sind Fakten in Form von Entitäten $e_1,..., e_j$, d.h. Subjekten und Objekten, und in Form von Beziehungen, d.h. Prädikaten, insbesondere Form der erwähnten Tripel im Datenspeicher 108 gespeichert. Mit j ist eine von Null verschiedene positive ganze Zahl bezeichnet, die eine Anzahl der Entitäten des Knowledge Graphs angibt.

Der Datenspeicher 108 ist ausgebildet, zudem Information über Cluster $c_1,..., c_k$ zu speichern. Mit k ist eine von Null verschiedene positive ganze Zahl bezeichnet, die eine Anzahl der zu bestimmenden Cluster aus einer Menge von Clustern C angibt.

Die Gruppiereinrichtung 102, die Lerneinrichtung 104, und die Rückführungseinrichtung 106 sind ausgebildet untereinander und mit dem Datenspeicher über eine Datenverbindung 110 zu kommunizieren.

Die Gruppiereinrichtung 102 ist ausgebildet, basierend auf der Zuordnung $G$ und basierend auf Ziel-Entitäten $T$ eine Zuordnung der Ziel-Entitäten $T$ zu den k Cluster $c_1,..., c_k$ zu bestimmen. Die Gruppiereinrichtung 102 ist ausgebildet, in einem iterativen Vorgehen, Zuordnungen $G'$ abhängig von einer Rückführungsgröße $\varepsilon$ zu bestimmen, die wie im Folgenden beschrieben bestimmt wird. Es kann vorgesehen sein, zusätzlich zu den erwähnten Eingangsgrößen der Gruppiereinrichtung 102 auch Daten anderer externer Quellen, beispielweise Textkörper, zu verwenden. Zum Beispiel können dazu Embeddings vorgesehen sein, d.h. Vektorrepräsentationen der Entitäten auf Basis derer man die Cluster bestimmt. In diesem Fall kann nicht nur basierend auf dem Knowledge Graphen, sondern auf einer Kombination aus Knowledge Graph und Texten gelernt werden, in denen die Entitäten vorkommen. Optional umfasst die Vorrichtung 100 dafür eine Schnittstelle 112. Die Gruppiereinrichtung 102 ist im Beispiel ausgebildet, eine Basis-Zuordnung $G^C$ zu bestimmen. Die Gruppiereinrichtung 102 ist zudem dazu ausgebildet, darauf basierend und basierend auf einer gewichteten symbolischen Beschreibung der für die Basis-Zuordnung $G^C$ bestimmten Cluster $c_1,..., c_k$ eine veränderte Zuordnung $G^{RC}$ zu bestimmen.

Die Lerneinrichtung 104 ist ausgebildet, abhängig von der Basis-Zuordnung $G^C$ und dem Knowledge Graph $G$ diese gewichtete symbolische Beschreibung der bestimmten Cluster $c_1,..., c_k$ zu bestimmen. Die Lerneinrichtung 104 kann ausgebildet sein, die Beschreibung abhängig von einer maximalen Länge einer Beschreibung $m$ und/oder einer minimalen Abdeckung $\mu$ zu bestimmen. Die Lerneinrichtung 104 ist ausgebildet, abhängig von der Basis-Zuordnung $G^C$ und der Zuordnung $G$ wenigstens eine Inferenzregel zu induzieren.

Die Rückführungseinrichtung 106 ist ausgebildet, abhängig von den bestimmen Cluster $c_1,..., c_k$ und der bestimmten Beschreibung eine Rückführungsgröße $\varepsilon$ für die Gruppiereinrichtung 102 zu bestimmen.

Die Vorrichtung 100 ist ausgebildet, in Iterationen statt der Zuordnung $G$ unterschiedliche Zuordnungen $G'$ und dafür unterschiedliche Beschreibungen zu bestimmen. Die Rückführungseinrichtung 106 ist in einem Aspekt ausgebildet, eine Differenz $\Delta q_{diff}$ zwischen der Basis-Zuordnung $G^C$ und der veränderten Zuordnung $G^{RC}$ zu bestimmen und abhängig von der Differenz $\Delta q_{diff}$ die Rückführungsgröße $\varepsilon$ für eine weitere Iteration zu bestimmen oder nicht. Die Rückführungseinrichtung 106 ist in diesem Aspekt ausgebildet, die Zuordnung im Datenspeicher 108 abzuspeichern oder optional über die Schnittstelle 112 auszugeben, wenn die Differenz einen Schwellwert $\theta$ unterschreitet. In diesem Fall ist die Vorrichtung 100 ausgebildet, keine weitere Iteration durchzuführen.

Im Folgenden wird ein Verfahren zum Gruppieren von vier Ziel-Entitäten $T = \{e_1,...,e_4\}$ zu zwei Clustern $c_1, c_2$ beschrieben. Das Verfahren ist für eine Vielzahl Ziel-Entitäten, d.h. weniger oder mehr als vier Ziel-Entitäten, ebenfalls anwendbar. Das Verfahren ist für eine Vielzahl Cluster, d.h. weniger oder mehr als zwei Cluster, ebenfalls anwendbar.

Durchgezogene Pfeile stellen eine bevorzugte Reihenfolge der Schritte ausgehend vom Knowledge Graph $G$ dar. Gestrichelt gekennzeichnete Pfeile markieren zusätzlich einzelne Eingangsgrößen, die für einzelne Schritte verwendet werden.

Das Verfahren geht von der Zuordnung $G$ aus, die im Beispiel als Knowledge Graph vorgegeben ist.

Nach dem Start wird in einem Schritt 202 abhängig von der Zuordnung $G$ eine Einbettung der Zuordnung $G$ bestimmt. Im Beispiel wird für den Knowledge Graph eine Einbettung des Knowledge Graphs bestimmt. Optional wird die Einbettung abhängig von Daten $E$ aus einer externen Quelle bestimmt. Die Daten E können aus einer Textsammlung extrahierte Daten sein.

Wie erwähnt ist die Verwendung des Knowledge Graphs selbst ungünstig, da der Knowledge Graph unvollständig sein kann, wodurch es schwer wird, eine Ähnlichkeitsmaß abhängig von der Struktur des Knowledge Graphs anzugeben.

Im Schritt 202 wird daher eine Einbettung des Knowledge Graphs bestimmt. Diese kompensiert im Zustandsraum die möglicherweise fehlende Information aus dem Knowledge Graphs. Zudem ist es einfacher möglich, die zusätzlichen, auf Text basierenden Eingangsgrößen d.h. der Daten E, im Zustandsraum mit einzubeziehen. Beim Lernen von Embeddings, d.h. von Vektorrepräsentationen, können verschiedene Zielfunktionen kombiniert werden: z.B. eine Zielfunktion, die dafür sorgt, dass der Knowledge Graph gut repräsentiert wird und eine weitere Zielfunktion, die dafür sorgt, dass ein Kontext von Wörtern im Text gut repräsentiert wird.

Im Beispiel wird ein Einbettungsmodell verwendet, das abhängig von der Zuordnung $G$, im Beispiel vom Knowledge Graph, Vektoren im Zustandsraum bestimmt. Die Basis-Zuordnung $G^C$ umfasst eine Abbildung wenigstens eines Teils der Zuordnung G in einen mehrdimensionalen Zustandsraum. In den Iterationen wird dasselbe für die Zuordnung $G'$ ausgeführt.

Anschließend wird ein Schritt 204 ausgeführt.

Im Schritt 204 wird eine Basis-Zuordnung $G^C$ der vier Ziel-Entitäten $T = \{e_1,...,e_4\}$ zu den zwei Clustern $c_1, c_2$ abhängig von vier Ziel-Entitäten $T = \{e_1,...,e_4\}$ und abhängig von der Einbettung des Knowledge Graphs vorgenommen. Beispielsweise werden die Vektoren im Zustandsraum die $T = \{e_1,...,e_4\}$ definieren und die Anzahl der gewünschten Cluster k, im Beispiel k = 2, mit einem K-means Algorithmus zugeordnet. Dadurch entsteht eine Menge von Clustern C, wobei jeder der Cluster eine Untermenge der Ziel-Entitäten $T = \{e_1,...,e_4\}$ umfasst. Als Randbedingung wird angenommen, dass diese Cluster disjunkt sind. Im Beispiel werden damit Tripel $bt(e_o, c_p: e_o \in c_p)$ bestimmt. Die Basis-Zuordnung $G^C$ ist beispielsweise ein Knowledge Graph, der durch die Tripel $bt(e_o, c_p)$ definiert ist. Mit $bt$ ist ein Prädikat definiert, das die Zuordnung einer Entität $e_o$ zu einem Cluster $c_p$ angibt. Beispielsweise wird mit Indizes $o = 1,...,4$ und $p = 1, 2$ für die vier Ziel-Entitäten $T = \{e_1,...,e_4\}$ und die zwei Cluster $c_1$, $c_2$ die folgende Basis-Zuordnung $G^C$ bestimmt:

$$\{bt(e_1, c_1), bt(e_3, c_1), bt(e_2, c_2), bt(e_4, c_2)\}$$

Für jedes Cluster $c_p \in C$ aus der Menge der Cluster $C$ werden im Beispiel für jede der Entitäten $e_o$ aus diesem Cluster $c$ Fakten für den Knowledge Graph der Basis-Zuordnung $G^C$ bestimmt, der angibt, dass dieser Entität $e_o$ in diesem Cluster $c_p$ enthalten ist.

Anschließend wird ein Schritt 206 ausgeführt.

Im Schritt 206 wird abhängig von der Basis-Zuordnung $G^C$ wenigstens eine Inferenzregel induziert. In einer ersten Iteration wird dazu die Zuordnung $G$ verwendet. In den weiteren Iterationen wird dazu die Zuordnung $G'$ verwendet. Die Bestimmung der Zuordnung $G'$ wird im Folgenden beschrieben. Im Beispiel wird eine Vereinigung $G^{Cluster} = U_{c_p \in C} G^C$ der Knowledge Graphen der Basis-Zuordnung $G^C$ aller Cluster $c_p$ bestimmt. Abhängig von der Vereinigung $G^{Cluster}$ werden Inferenzregeln gelernt, mit einer Abdeckung von mindestens $\mu$, einem Kopf der Form $bt(X,c)$ und einem Rumpf umfassend eine Konjunktion von höchstens $m$ Tripeln. Das Prädikat $bt$, definiert eine Zugehörigkeit einer Entität als Subjekt $X$ zu einem Cluster im Objekt $c$. Diese Inferenzregeln definieren die Zuordnung von Entitäten zu Clustern durch die Beziehungen aus der Zuordnung $G$ oder der Zuordnung $G'$. Der Köper der so gelernten Inferenzregeln entspricht möglichen Beschreibungen für die Cluster.

Um eine symbolische Beschreibung für die Cluster zu lernen, werden Inferenzregeln induziert. Für jeden der Köpfe $bt(X,c)$ wird eine oder werden im Beispiel mehrere Inferenzregeln als Kandidaten bestimmt. Das Prädikat $bt$ ist nicht in der symbolischen Beschreibung des Clusters enthalten, da es nicht selbst in der Zuordnung $G$ oder der Zuordnung $G'$ enthalten ist. Um für jedes Cluster die beste mögliche Beschreibung aus den bestimmten Kandidaten zu bestimmen, wird im Beispiel eine Bewertung mit einem Punktesystem vorgenommen, das die Eignung der Beschreibung zur Unterscheidung eines der Cluster $c'$ von den anderen der Cluster $c$ angibt. Im Folgenden wird diese Bewertung mit dem Punktesystem als Unterscheidungsqualität $q_{diff}$ bezeichnet und beispielsweise bestimmt als:

$$q_{diff}(d, c, C) = \begin{cases} 0, if \min_{c' \in C \setminus c} \{cov(d, c, C) - cov(d, c', C)\} \leq 0 \\ cov(d, c, C) - \dfrac{\sum_{C' \in C \setminus c} cov(d, c'C)}{|C \setminus c|}, otherwise \end{cases}$$

Dabei ist $d$ die Beschreibung, d.h. im Beispiel die konjunktive Abfrage $d(X)$ und $cov(:)$ ein Maß für die Abdeckung des jeweiligen Arguments. Die Unterscheidungsqualität $q_{diff}(d,c,C)$ ist Null, wenn die Beschreibung $d$ ein Cluster $c' \in C$ besser beschreibt, als ein Cluster $c$. Anderenfalls ist die Unterscheidungsqualität $q_{diff}(d,c,C)$ eine Differenz zwischen der Abdeckung für die Beschreibung $d$ für den Cluster $c'$ und einem Mittelwert für die Abdeckung für die Beschreibung $d$ für die anderen Cluster $c$ aus C.

Abhängig von dieser Unterscheidungsqualität wird im Beispiel die Inferenzregel mit der höchsten Unterscheidungsqualität ausgewählt. Ein Maß $q$ für eine Qualität der ausgewählten Inferenzregel ist im Beispiel

$$q(D, C) = \frac{1}{|D|} \sum_{i=1}^{|C|} q_{diff}(d_i, c_i, C)$$

Im Beispiel werden für Prädikate $p_1, p_2, p_3, p_4$ die folgenden Inferenzregeln induziert:

$$bt(X, c_1) \leftarrow p_1, p_2. \quad q = 0.9$$
$$bt(X, c_1) \leftarrow p_3. \quad q = 0.6$$
$$bt(X, c_2) \leftarrow p_1, p_3. \quad q = 0.8$$
$$bt(X, c_2) \leftarrow p_2, p_4. \quad q = 0.5$$

Der Köper der jeweiligen Inferenzregel ist durch Prädikate $p_1, p_2, p_3, p_4$ oder eine Kombination, d.h. im Beispiel eine Konjunktion, dieser definiert. Der Kopf der Inferenzregel gibt für eine Entität X an, welchem der Cluster $c_1$, $c_2$ diese

zugeordnet ist.

Anschließend wird ein Schritt 208 ausgeführt.

Im Schritt 208 wird abhängig von den Inferenzregeln, der Basis-Zuordnung $G^C$ und der Zuordnung $G$ die veränderte Zuordnung $G^{Rc}$ bestimmt. Optional kann zusätzliches Hintergrundwissen F verwendet werden. Beispielsweise kann eine Inferenzregel verwendet werden, die auf Hintergrundwissen F basiert, und die daher nicht gelernt wird oder werden muss.

Die veränderte Zuordnung $G^{RC}$ wird abhängig von der besten Inferenzregel, d.h. der Inferenzregel mit der höchsten Unterscheidungsqualität q bestimmt, so dass für eine Menge besserer Cluster $C'$ gilt:

$$q(D, C') \geq q(D, C)$$

Dazu können abhängig von den Ziel-Entitäten $T$ und den besten Inferenzregeln Schlussfolgerungen gezogen werden, abhängig von denen die neue veränderte Zuordnung $G^{Rc}$ bestimmt wird. Diese kann in einem gewichteten Knowledge Graph $G^{interred}$ für die veränderte Zuordnung $G^{Rc}$ gespeichert sein. Als Gewichte für diesen gewichteten Knowledge Graph $G^{interred}$ werden im Beispiel die Werte des Maßes $q$ für die Qualität der jeweiligen Inferenzregel verwendet.

Das Maß $q$ für die Qualität und damit auch das Gewicht wird beispielsweise für die Zuordnung der Entität $e_4$ zum Cluster $c_2$ bestimmt zu $bt(e_4,c_2)$ $q = 0.7$ und für die Zuordnung der Entität $e_4$ zum Cluster $c_1$ bestimmt zu $bt(e_4,c_1)$ $q = 0,6$. In diesem Fall des Konflikts, wird für einen konsistenten Knowledge Graph $G^{inferred\_consistent}$ die Inferenzregel mit einem Größeren Maß $q$ für die Qualität, d.h. $q = 0.7$, ausgewählt.

Die veränderte Zuordnung $G^{RC}$ wird im Beispiel wie folgt bestimmt:

$$G^{RC} = G^{inferred\_consistent} \cup \left(G^{Clusters} \setminus G^{inferred}\right)$$

Im Beispiel wird für die Cluster $c_1 = \{e_1, e_3, e_4\}$ und $c_2 = \{e_2\}$ wegen $bt(e_4,c_2)$ $q = 0.7$ eine veränderte Zuordnung $c_1 = \{e_1, e_3\}$ und $c_2 = \{e_2, e_4\}$ die veränderte Zuordnung $C^{Rc}$ bestimmt als:

$$\{bt(e_1, c_1), bt(e_3, c_2), bt(e_2, c_2), bt(e_4, c_2)\}$$

Anschließend wird ein Schritt 210 ausgeführt.

Im Schritt 210 wird überprüft, ob ein Unterschied $\Delta q_{diff}$ zwischen der Basis-Zuordnung $G^C$ und der veränderten Zuordnung $G^{RC}$ den Schwellwert $\theta$ unterschreitet. Wenn der Unterschied den Schwellwert $\theta$ erreicht, oder überschreitet, wird ein Schritt 212 ausgeführt. Anderenfalls wird ein Schritt 214 ausgeführt. Im Beispiel wird geprüft, ob der Unterschied $\Delta q_{diff}$ kleiner als der Schwellwert $\theta$ ist

$$\Delta q_{diff} = q_{diff}(D, C') - q_{diff}(D, C) \leq \theta$$

Im Schritt 212 wird die Rückführungsgröße $\varepsilon$ bestimmt. Im Beispiel wird abhängig von der Zuordnung $G$ und der Rückführungsgröße $\varepsilon$ die Zuordnung $G'$ bestimmt. Die Rückführungsgröße $\varepsilon$ umfasst im Beispiel positive Beispiele $\varepsilon^+$ und negative Beispiele $\varepsilon$, die abhängig von der Zuordnung $G$ und von der veränderten Zuordnung $G^{RC}$ bestimt werden. Im Beispiel ist jedes positive Beispiel $\varepsilon^+$ durch eine Zuordnungen einer Entität zu einem Cluster definiert, die sowohl in der Basis-Zuordnung $G^C$ als auch in der darauf basierenden veränderten Zuordnung $G^{RC}$ enthalten ist, d.h. die beibehalten wird. Negative Beispiele sind nicht in beiden enthaltene Zuordnungen. Abhängig von den Beispielen $\varepsilon = \varepsilon^+ \cup \varepsilon$ werden der Zuordnung $G'$ positive Beispiele $\varepsilon^+$ als Fakten hinzugefügt, und in diesem enthaltene Fakten, die einem negativen Beispiel $\varepsilon$ entsprechen, aus der Zuordnung $G'$ entfernt.

Anschließend wird der Schritt 202 ausgeführt. In jeder erneuten Iteration wird im Beispiel die Zuordnung $G'$ statt der Zuordnung $G$ verwendet.

Im Schritt 214 wird die Zuordnung der Ziel-Entitäten zu den Clustern ausgegeben oder abgespeichert. Im Beispiel wird zudem die gewichtete symbolische Beschreibung bestimmt. Nach mehreren Iterationen wird als Ergebnis beispielsweise folgendes ausgegeben:

$$c1 = \{e_1, e_3, e_4\} | bt(X, c_1) \leftarrow p_1, p_2. \quad q = 0.98$$
$$c2 = \{e_2\} | bt(X, c_2) \leftarrow p_1, p_3. \quad q = 0.95$$

Anschließend endet das Verfahren.

Das Verfahren eignet sich zur Klassifizierung verschiedenster Daten. Aus den Daten digitaler Bilder werden damit die darin enthaltenen Konzepte, die Szenen oder die Objekte gelernt. Für Bildverarbeitung wird beispielsweise eine Vielzahl digitaler Bilder bereitgestellt. Für jedes der digitalen Bilder wird in diesem Fall eine der Ziel-Entitäten $e_1,...,e_j$ bestimmt. Eine der Ziel-Entitäten $e_1,...,e_j$ für ein bestimmte digitales Bild wird beispielseise abhängig von Daten oder Metadaten des jeweiligen digitalen Bildes bestimmt. die Daten oder Metadaten charakterisieren im Beispiel ein Objekt aus dem digitalen Bild. Die digitalen Bilder können dazu annotiert sein. Die Annotation kann bereits vorgegeben oder in einer Objekterkennung bestimmt werden. Die Zuordnung der Ziel-Entitäten $e_1,...,e_j$ wird beispielsweise zu wenigstens einem Cluster $c_1,...,c_k$, bestimmt, das ein Konzept, eine Szene oder ein Objekt repräsentiert.

**Patentansprüche**

1. Computerimplementiertes Verfahren zum Gruppieren von Ziel-Entitäten ($e_1,...,e_j$) in Cluster ($c_1,...,c_k$), **dadurch gekennzeichnet, dass** in einem Berechnungsschritt für die Ziel-Entitäten ($e_1,...,e_j$) abhängig von einer Zuordnung (G, G') für Entitäten (X) eine Basis-Zuordnung ($G^C$) bestimmt wird (204), in der jeder der Ziel-Entitäten ($e_1,...,e_j$) ein Cluster ($c_1,...,c_k$) zugeordnet ist, wobei abhängig von der Zuordnung (G, G') für Entitäten (X) und abhängig von der Basis-Zuordnung ($G^C$) Inferenzregeln (bt) bestimmt werden (206), wobei jede der Inferenzregeln (bt) eine Zuordnung von Entitäten (X) zu einem der Cluster ($c_1,...,c_k$) definiert, wobei abhängig von der Zuordnung (G, G') für Entitäten (X) und den Inferenzregeln (bt) eine veränderte Zuordnung ($G^{RC}$) bestimmt wird (208), wobei überprüft wird (210), ob ein Unterschied ($\Delta q_{diff}$) zwischen der Basis-Zuordnung ($G^C$) und der veränderte Zuordnung ($G^{RC}$) einen Schwellwert ($\theta$) unterschreitet, wobei wenn der Unterschied ($\Delta q_{diff}$) den Schwellwert ($\theta$) unterschreitet, eine Zuordnung der Ziel-Entitäten ($e_1,...,e_j$) zu den Clustern ($c_1,..., c_k$) ausgegeben oder abgespeichert wird (214) und wobei anderenfalls abhängig vom Unterschied ($\Delta q_{diff}$) eine Rückführungsgröße ($\varepsilon$) bestimmt wird (212) und abhängig von der Zuordnung (G, G') für Entitäten (X) und der Rückführungsgröße ($\varepsilon$) eine Zuordnung ($G'$) bestimmt wird, welche die Zuordnung (G, G') für eine erneute Ausführung des Berechnungsschritts ersetzt.

2. Verfahren nach Anspruch 1, **dadurch gekennzeichnet, dass** abhängig von der Zuordnung (G, G') eine symbolische Beschreibung $d(X)$ der Cluster ($c_1,...,c_k$) bestimmt wird, wobei die symbolische Beschreibung $d(X)$ ausgegeben oder abgespeichert wird.

3. Verfahren nach einem der vorherigen Ansprüche, **dadurch gekennzeichnet, dass** für jede Inferenzregel (bt) aus einer Mehrzahl Inferenzregeln (bt), die eine Zuordnung von Entitäten (X) zu demselben Cluster (c) definiert, ein Maß (q) für eine Qualität der Inferenzregel (bt) bestimmt wird, und wobei die Inferenzregel (bt) mit dem gegenüber den anderen der Inferenzregeln (bt) für dasselbe Cluster (c) größten Maß (q) für die Qualität ausgewählt wird.

4. Verfahren nach einem der vorherigen Ansprüche, **dadurch gekennzeichnet, dass** die Basis-Zuordnung ($G^C$) eine Abbildung wenigstens eines Teils der Zuordnung (G, G') für Entitäten (X) in einen mehrdimensionalen Zustandsraum umfasst, wobei die Inferenzregeln (bt) abhängig von der Abbildung bestimmt werden.

5. Verfahren nach einem der vorherigen Ansprüche, **dadurch gekennzeichnet, dass** die Entitäten (X) Subjekte und Objekte umfassen, wobei die Zuordnung (G, G') Prädikate definiert, wobei jedes der Prädikate einem Subjekt ein Objekt zuordnet, wobei abhängig von der Rückführungsgröße ($\varepsilon$) wenigstens ein Prädikat für ein Objekt und ein Subjekt bestimmt wird, das der Zuordnung ($G,G'$) für die erneute Ausführung des Berechnungsschritts hinzugefügt oder aus dieser entfernt wird.

6. Verfahren nach einem der vorherigen Ansprüche, **dadurch gekennzeichnet, dass** die Basis-Zuordnung ($G^C$) als Entitäten Subjekte und Objekte umfasst, wobei die Subjekte Ziel-Entitäten ($e_1,...,e_j$) repräsentieren, wobei die Objekte Cluster ($c_1,...,c_k$) repräsentieren, wobei die Zuordnung (G, G') Prädikate definiert, wobei jedes der Prädikate einem Subjekt ein Objekt zuordnet, wobei jede der Inferenzregeln einen Rumpf und einen dem Rumpf zugeordneten Kopf umfasst, wobei der Rumpf abhängig von wenigstens einem Prädikat oder abhängig von einer Konjunktion von wenigstens zwei Prädikaten definiert ist, wobei der Kopf für ein Subjekt, das eine der Ziel-Entitäten ($e_1,...,e_j$) repräsentiert definiert, welchem der Objekte, die die Cluster ($c_1,...,c_k$) repräsentieren, dieses Subjekt zugeordnet ist.

7. Verfahren nach einem der vorherigen Ansprüche, **dadurch gekennzeichnet, dass** eine Inferenzregel unabhängig von der Basis-Zuordnung ($G^C$) basierend auf Hintergrundwissen (F) bereitgestellt wird, wobei die veränderte Zuordnung ($G^{RC}$) abhängig von der Zuordnung (G, G') für Entitäten (X), den Inferenzregeln (bt) und dieser Inferenzregel die veränderte Zuordnung ($G^{RC}$) bestimmt wird (208).

8. Verfahren nach einem der vorherigen Ansprüche, **dadurch gekennzeichnet, dass** die Entitäten (X) Subjekte und Objekte umfassen, wobei die Zuordnung (G, G') Prädikate definiert, wobei jedes der Prädikate einem Subjekt ein Objekt zuordnet, wobei die symbolische Beschreibung ($d(X)$) abhängig von wenigstens einem Prädikat oder abhängig von einer Konjunktion von wenigstens zwei Prädikaten definiert ist.

9. Verfahren nach einem der vorherigen Ansprüche, **dadurch gekennzeichnet, dass** eine Vielzahl digitaler Bilder bereitgestellt wird, wobei für jedes der digitalen Bilder insbesondere abhängig von Daten oder Metadaten des digitalen Bildes eine der Ziel-Entitäten ($e_1,...,e_j$) bestimmt wird, die ein Objekt aus dem digitalen Bild charakterisiert, wobei die Zuordnung der Ziel-Entitäten ($e_1,...,e_j$) zu wenigstens einem Cluster ($c_1,...,c_k$), bestimmt wird, das ein Konzept, eine Szene oder ein Objekt repräsentiert.

10. Vorrichtung (100) zum Gruppieren von Ziel-Entitäten ($e_1,...,e_j$) in Cluster ($c_1,...,c_k$), **dadurch gekennzeichnet, dass** die Vorrichtung (100) einen Datenspeicher (108) für Zuordnungen und Inferenzregeln umfasst, wobei die Vorrichtung (100) eine Gruppiereinrichtung (102) umfasst, die ausgebildet ist, abhängig von den Ziel-Entitäten ($e_1,...,e_j$) und abhängig von einer Zuordnung (G, G') für Entitäten (X) eine Basis-Zuordnung ($G^C$) zu bestimmen, in der jeder der Ziel-Entitäten ($e_1,...,e_j$) ein Cluster ($c_1,...,c_k$) zugeordnet ist, eine Lerneinrichtung (104), die ausgebildet ist, abhängig von der Zuordnung (G, G') für Entitäten (X) und abhängig von der Basis-Zuordnung ($G^C$) Inferenzregeln (bt) zu bestimmen, wobei jede der Inferenzregeln (bt) eine Zuordnung von Entitäten (X) zu einem der Cluster ($c_1,...,c_k$) definiert, und wobei die Lerneinrichtung (104) ausgebildet ist, abhängig von der Zuordnung (G, G') für Entitäten (X) und den Inferenzregeln (bt) eine veränderte Zuordnung ($G^{RC}$) zu bestimmen, und eine Rückführungseinrichtung (106), die ausgebildet ist, zu überprüfen, ob ein Unterschied ($\Delta q_{diff}$) zwischen der Basis-Zuordnung ($G^C$) und der veränderte Zuordnung ($G^{RC}$) einen Schwellwert ($\theta$) unterschreitet, und die ausgebildet ist, wenn der Unterschied ($\Delta q_{diff}$) den Schwellwert ($\theta$) unterschreitet, eine Zuordnung der Ziel-Entitäten ($e_1,...,e_j$) zu den Clustern ($c_1,...,c_k$) auszugegeben oder abzuspeichern, und die ausgebildet ist anderenfalls abhängig vom Unterschied ($\Delta q_{diff}$) eine Rückführungsgröße ($\varepsilon$) zu bestimmen und abhängig von der Zuordnung (G, G') für Entitäten (X) und der Rückführungsgröße ($\varepsilon$) eine Zuordnung ($G'$) zu bestimmen, welche die Zuordnung (G, G') ersetzt.

11. Vorrichtung (100) nach Anspruch 10, **dadurch gekennzeichnet, dass** die Vorrichtung (100) ausgebildet ist, ein Verfahren nach einem der Ansprüche 2 bis 9 auszuführen.

12. Computerprogramm, **dadurch gekennzeichnet, dass** das Computerprogramm computerlesbare Instruktionen umfasst, bei deren Ausführen auf einem Computer ein Verfahren nach einem der Ansprüche 1 bis 9 abläuft.

13. Computerprogrammprodukt, **gekennzeichnet durch** ein maschinenlesbares Speichermedium, auf dem das Computerprogramm nach Anspruch 12 gespeichert ist.

100

102

110

108    $c_1, \ldots, c_k$
       $e_1, \ldots, e_j$

104

112

106

**Fig. 1**

$T = \{e_1, \ldots, e_4\}$

E

G

202

204

206

$G^C$

bt

212

G'

G

208

F

$\varepsilon$

G

210

$\theta$

$G^{RC}$

214

Ende

**Fig. 2**

**Europäisches Patentamt**
**European Patent Office**
**Office européen des brevets**

# EUROPÄISCHER RECHERCHENBERICHT

Nummer der Anmeldung

EP 19 20 8571

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/008540 A1 (SHET VINAY DAMODAR [US] ET AL) 14. Januar 2010 (2010-01-14) <br> * Zusammenfassung * <br> * Absätze [0004], [0167] * <br> ----- | 1-13 | INV. <br> G06F16/55 |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| Den Haag | 11. März 2020 | Hackelbusch, Richard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 8571

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2020

| Im Recherchenbericht angeführtes Patentdokument | Datum der Veröffentlichung | Mitglied(er) der Patentfamilie | Datum der Veröffentlichung |
|---|---|---|---|
| US 2010008540 A1 | 14-01-2010 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Explaining clusters with inductive logic programming and linked data. **ILARIA TIDDI ; MATHIEU D'AQUIN ; ENRICO MOTTA.** Proceedings of the 12th International Semantic Web Conference (Posters & Demonstrations Track) - Volume 1035 (ISWC-PD '13). 2013, vol. 1035, 257-260
- Data patterns explained with linked data. **ILARIA TIDDI ; MATHIEU D'AQUIN ; ENRICO MOTTA.** Proceedings of the 2015th European Conference on Machine Learning and Knowledge Discovery in Databases - Volume Part III (ECMLPKDD'15). Springer, 2015, vol. III, 271-275

- Towards K-means-friendly spaces: simultaneous deep learning and clustering. **BO YANG ; XIAO FU ; NICHOLAS D. SIDIROPOULOS ; MINGYI HONG.** Proceedings of the 34th International Conference on Machine Learning - Volume 70 (ICML'17). 2017, vol. 70, 3861-3870